Europäisches Patentamt

European Patent Office

Office européen des brevets

(11) Numéro de publication: **0 233 417 B1**

# FASCICULE DE BREVET EUROPEEN

(45) Date de publication du fascicule du brevet:
31.01.90

(51) Int. Cl.⁴: **H02G 15/113, H02G 15/117**

(21) Numéro de dépôt: 86400377.7

(22) Date de dépôt: 21.02.86

(54) **Manchon en matière plastique pour protéger l'épissure de câbles électriques ou téléphoniques, et procédé pour réaliser l'étanchéité d'un tel manchon.**

(43) Date de publication de la demande:
26.08.87 Bulletin 87/35

(45) Mention de la délivrance du brevet:
31.01.90 Bulletin 90/5

(84) Etats contractants désignés:
AT BE CH DE GB IT LI LU NL SE

(56) Documents cités:
EP-A- 0 098 765
DE-A- 2 630 411
FR-A- 2 397 733
FR-A- 2 570 557
US-A- 3 757 031

(73) Titulaire: ETABLISSEMENTS MOREL - ATELIERS
ELECTROMECANIQUES DE FAVIERES (Société
Anonyme), Favières,
F-28170 Chateauneuf-en-Thymerais(FR)

(72) Inventeur: Morel, Jacques,
F-28170 Fontaine-les-Ribouts(FR)
Inventeur: Morel, Didier, Favières,
F-28170 Chateauneuf-en-Thymerais(FR)

(74) Mandataire: Bouju, André, Cabinet Bouju 38 avenue de
la Grande Armée, F-75017 Paris(FR)

## Description

La présente invention concerne un manchon en matière plastique pour protéger l'épissure de câbles électriques ou téléphoniques.

L'invention vise également le procédé pour réaliser l'étanchéité d'un tel manchon.

Le brevet français 2 469 782 et les certificats d'addition rattachés à ce brevet:2 479 545, 2 492 151, ainsi que le brevet EP-A 0 098 765 déposés par la demanderesse décrivent tous un manchon pour protéger l'épissure de câbles notamment téléphoniques, comprenant deux demi-coquilles assemblées l'une contre l'autre suivant leurs bords adjacents. Ces bords adjacents définissent entre eux en position d'assemblage une gorge périphérique dans laquelle on introduit par exemple par injection, une matière pâteuse d'étanchéité.

Aux extrémités opposées du manchon, le câble est serré entre une série de mâchoires encastrées de façon amovible à l'intérieur du manchon.

Dans le brevet français et les certificats d'addition précités, la demanderesse a décrit différents moyens pour obtenir une excellente étanchéité entre les bords adjacents des deux demi-coquilles du manchon et également entre le câble et les mâchoires de serrage encastrées aux extrémités de ce manchon.

Les solutions décrites dans ce brevet et ces certificats d'addition sont toutes satisfaisantes. Cependant celles-ci font appel à des matériels compliqués à utiliser, tels que des cartouches pour injecter la matière d'étanchéité dans la gorge périphérique définie entre les bords adjacents des demi-coquilles préalablement assemblées.

Le but de la présente invention est donc de créer un manchon pour protéger des câbles permettant d'obtenir une excellente étanchéité entre les bords adjacents des demi-coquilles de ce manchon, à l'aide de moyens à la fois peu onéreux et simples à mettre en oeuvre.

Le manchon de protection visé par l'invention, comprend deux demi-coquilles assemblées l'une contre l'autre suivant leurs bords adjacents, le bord de l'une des demi-coquilles comprenant une nervure longitudinale engagée dans une rainure ménagée dans le bord adjacent de l'autre demi-coquille et des moyens d'étanchéité étant prévus entre lesdits bords.

Suivant l'invention, ce manchon est caractérisé en ce que la rainure est bordée du côté intérieur, par une paroi suffisamment mince pour être flexible, en ce que la nervure engagée dans ladite rainure présente une hauteur légèrement inférieure à la profondeur de la rainure, en ce que la face de la nervure qui est adjacente à la face interne de ladite paroi flexible forme avec cette face un angle de quelques degrés dont le sommet est situé à l'extrémité de ladite paroi, l'espace défini par cet angle étant rempli par une bande de mastic qui est déformée et comprimée entre lesdites faces de la nervure et de la paroi.

Suivant le procédé conforme à l'invention, pour réaliser l'étanchéité entre les deux demi-coquilles du manchon de protection précité, on applique une bande de mastic contre la face interne de la paroi flexible qui borde la rainure de l'une des deux coquilles, on engage la nervure de l'autre demi-coquille dans la rainure, on serre l'une contre l'autre les deux demi-coquilles, après quoi on met l'intérieur du manchon sous pression.

Grâce à l'angle de quelques degrés existant entre les faces adjacentes de la nervure et de la paroi flexible, lorsque cette nervure est engagée dans la rainure, la bande de mastic se trouve comprimée entre ces deux faces et est progressivement déformée par fluage. La compression du mastic entre ces deux faces tend à faire fléchir la paroi flexible vers l'intérieur du manchon.

La pression qui est appliquée à l'intérieur du manchon, après assemblage des demi-coquilles l'une sur l'autre, par exemple au moyen de vis de serrage, tend à repousser la paroi flexible vers la nervure, ce qui a pour effet de comprimer le mastic en renforçant ainsi l'étanchéité. Grâce au coin formé entre les faces adjacentes de la paroi flexible et de la nervure, sous l'effet de la compression, le mastic tend à fluer davantage vers l'espace compris entre le sommet de la nervure et le fond de la rainure, ce qui est favorable à l'égard de l'étanchéité, et non pas à fluer vers le sommet de la paroi flexible et vers l'intérieur du manchon.

D'autres particularités et avantages de l'invention apparaîtront encore dans la description ci-après.

Aux dessins annexés, donnés à titre d'exem-d'exemples non limitatifs :

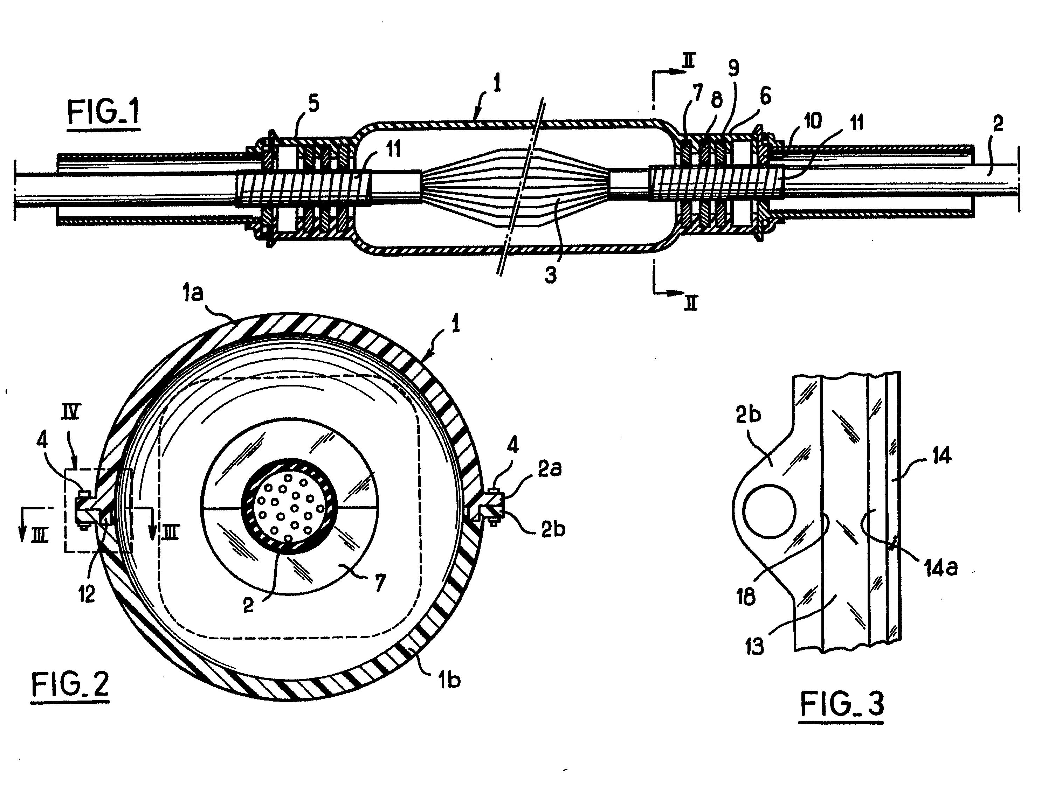

. la figure 1 est une vue en coupe longitudinale d'un manchon conforme à l'invention monté autour de l'épissure d'un câble téléphonique;

. la figure 2 est une vue en coupe, à échelle agrandie suivant le plan II-II de la figure 1;

. la figure 3 est une vue en coupe, à plus grande échelle, suivant le plan III-III de la figure 2, la demi-coquille supérieure étant supposée enlevée;

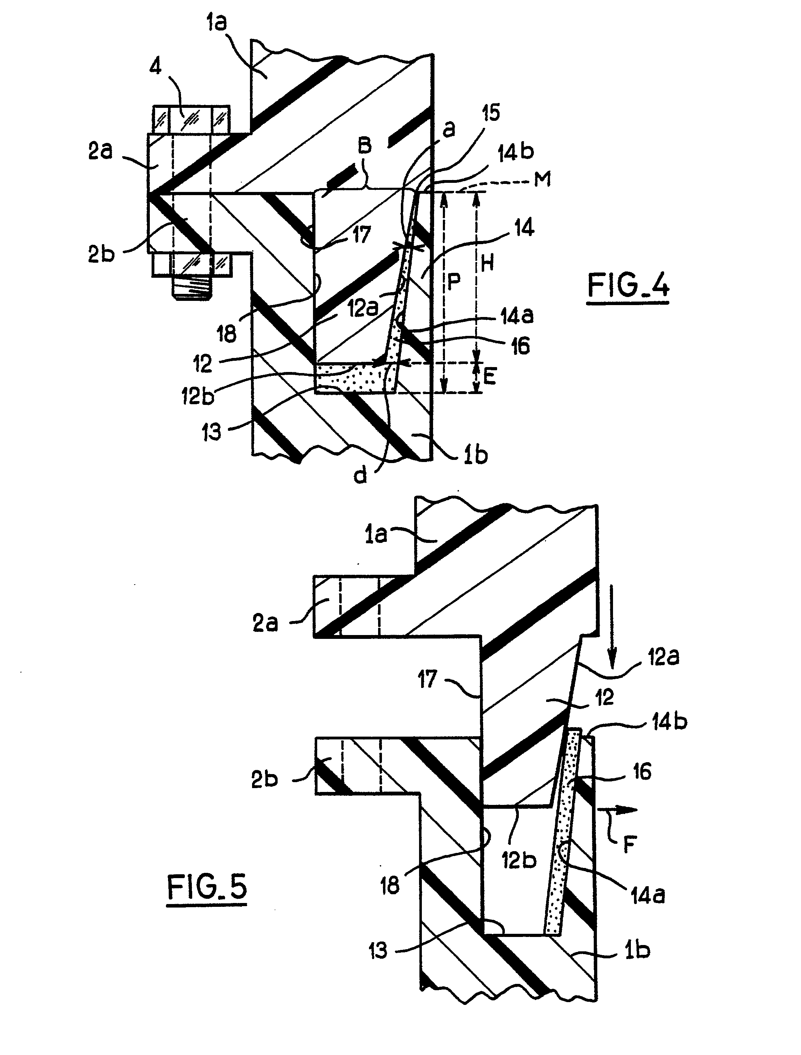

. la figure 4 est une vue, à grande échelle du détail IV de la figure 2;

. la figure 5 est une vue analogue à la figure 4, les demi-coquilles étant partiellement engagées l'une sur l'autre et illustrant la mise en oeuvre du procédé selon l'invention.

Dans la réalisation des figures 1 et 2, le manchon 1 en matière plastique monté autour de l'épissure 3 du câble téléphonique 2, comprend deux demi-coquilles 1a, 1b (voir figure 2) assemblées l'une contre l'autre, au moyen de vis de serrage 4, suivant leurs bords adjacents 2a, 2b.

Le câble 2 est fixé axialement aux extrémités 5, 6 du manchon par une série de mâchoires 7, 8, 9, 10 encastrées à l'intérieur du manchon 1 et serrées sur une bande adhésive 11 à base d'élastomère entourant le câble 2.

On voit plus en détail sur la figure 4 que le bord 2a de la demi-coquille 1a comprend une nervure longitudinale 12 engagée dans une rainure 13 ménagée dans le bord adjacent 2b de l'autre demi-coquille 1b (voir également figure 3).

La rainure 13 est bordée du côté intérieur par une paroi 14 suffisamment mince pour être flexible.

Comme indiqué sur la figure 4, la nervure 12 engagée dans la rainure 13 présente une hauteur H légèrement inférieure à la profondeur P de la rainure. De plus, la face 12a de la nervure 12 qui est adjacente à la face interne 14a de la paroi 14 forme avec cette face un angle (a) de quelques degrés (2 à 5 degrés par exemple) dont le sommet 15 est situé à l'extrémité 14b de la paroi 14. L'espace défini par cet angle (a) est rempli par une bande de mastic 16 qui est déformée et comprimée entre la face 12a de la nervure 12 et la face 14a de la paroi 14.

L'espace E compris entre le sommet 12b de la nervure 12 et le fond de la rainure 13 est rempli par la matière provenant du fluage de la bande de mastic 16 qui est comprimée entre les faces 12a et 14a.

Comme on le voit également sur la figure 4, la paroi 14, la rainure 13 et la nervure 12 présentent une section trapézoïdale, la grande base B de la section trapézoïdale de la rainure 13 coïncidant avec celle de la nervure 12 engagée dans celle-ci.

De plus, les faces 17 et 18 de la nervure 12 et de la rainure 13 qui sont opposées à la paroi flexible 14 sont appliquées l'une contre l'autre et sont sensiblement perpendiculaires au plan d'assemblage M des deux demi-coquilles 1a, 1b.

Conformément à l'invention, pour réaliser l'étanchéité entre les deux demi-coquilles 1a, 1b du manchon 1 que l'on vient de décrire, on procède comme suit (voir figure 5):

On applique une bande de mastic 16 contre la face interne 14a de la paroi flexible 14 qui borde la rainure 13 de la demi-coquille 1b, on engage la nervure 12 de l'autre demi-coquille 1a dans la rainure 13, on serre l'une contre l'autre les deux demi-coquilles 1a et 1b au moyen des vis 4, et après quoi on met sous pression l'intérieur du manchon 1. La pression interne de ce manchon peut être de l'ordre de quelques bars.

L'épaisseur de la bande de mastic 16 est au moins égale à la distance d̲ comprise entre le sommet 12b de la nervure 12 et la face interne 14a de la paroi flexible 14, lorsque cette nervure est complètement engagée dans la rainure.

De préférence, le volume de la bande de mastic 16 est au moins égal au volume de l'espace compris entre les faces adjacentes 12a, 14a de la nervure 12 et de la paroi flexible 14 et entre le sommet 12b de la nervure 12 et le fond de la rainure 13.

Lors de l'assemblage des demi-coquilles 1a, 1b du manchon conforme à l'invention, la nervure 12 de la demi-coquille 1a s'engage dans la rainure 13 de la demi-coquille 1b, comme indiqué sur la figure 5. Lors de cet engagement, la bande de mastic 16 dont le volume est au départ plus important que celui de l'espace disponible entre le coin formé par les deux faces 12a et 14a en regard, est déformée et comprimée progressivement, en fluant vers le bas, de sorte que l'excès de mastic remplit l'espace E. Cette compression du mastic 16 a pour effet de pousser la nervure 12a contre la face 18 de la rainure 13 et de pousser la paroi flexible 14 légèrement vers l'extérieur (voir flèche F de la figure 5).

Après serrage au moyen des vis 4, le mastic 16 est emprisonné et comprimé dans l'espace compris entre les deux faces 12a et 14a et entre le sommet 12b de la nervure et le fond de la rainure 13.

Après la mise sous pression de l'intérieur du manchon, on constate qu'aucune fuite n'a lieu vers l'extérieur.

Cette pression interne évite tout risque de pénétration d'humidité à l'intérieur du manchon. De plus, cette pression interne pousse la paroi flexible 14 dans une direction opposée à la flèche F de la figure 5, en comprimant encore davantage le mastic 16, ce qui renforce l'étanchéité et évite tout risque de fluage du mastic au niveau de la jonction entre le sommet 14b de la paroi flexible et la base de la nervure 12.

La bande de mastic 16 peut être appliquée manuellement sur la face 14a de la paroi 14. De préférence cependant, cette bande 16 est extrudée directement et automatiquement sur la face 14a de la paroi 14 au moyen d'une extrudeuse appropriée.

Le mastic 16 peut être à base d'élastomère d'un type couramment utilisé pour réaliser des travaux d'étanchéité. Ce mastic doit être suffisamment mou pour qu'il puisse prendre la forme du coin défini entre les surfaces 12a et 14a sans que cette déformation n'engendre une pression trop forte sur la paroi flexible 14 qui risquerait de faire trop fléchir celle-ci vers l'extérieur. Ainsi il existe une certaine corrélation déterminée par l'expérience, entre la déformabilité du mastic 16 et la flexibilité de la paroi 14.

**Revendications**

1. Manchon en matière plastique pour protéger l'épissure de câbles électriques ou téléphoniques, comprenant deux demi-coquilles (1a, 1b) assemblées l'une contre l'autre suivant leurs bords adjacents (2a, 2b), le bord (2a) de l'une (1a) des demi-coquilles comprenant une nervure longitudinale (12) engagée dans une rainure (13) ménagée dans le bord adjacent (2b) de l'autre demi-coquille (1b) et des moyens d'étanchéité étant prévus entre lesdits bords, caractérisé en ce que la rainure (13) est bordée du côté intérieur, par une paroi (14) suffisamment mince pour être flexible, en ce que la nervure (12) engagée dans ladite rainure présente une hauteur (H) légèrement inférieure à la profondeur (P) de la rainure, en ce que la face (12a) de la nervure (12) qui est adjacente à la face interne (14a) de ladite paroi flexible forme avec cette face un angle (a) de quelques degrés dont le sommet (15) est situé à l'extrémité de ladite paroi, l'espace défini par cet angle (a) étant rempli par une bande de mastic (16) qui est déformée et comprimée entre lesdites faces de la nervure et de la paroi.

2. Manchon conforme à la revendication 1, caractérisé en ce que l'espace (E) compris entre le sommet (12b) de la nervure (12) et le fond de la rainure (13) est au moins en partie rempli par la matière provenant du fluage de la bande de mastic (16) qui est comprimée entre les faces (12a et 14a).

3. Manchon conforme à l'une des revendications 1 ou 2, caractérisé en ce que la paroi flexible (14), la rainure (13) et la nervure (12) présentent une section trapézoïdale.

4. Manchon conforme à l'une des revendications 1 à 3, caractérisé en ce que les grandes bases (B) de la section trapézoïdale de la rainure (13) et de la nervure (12) engagée dans celle-ci, coïncident.

5. Manchon conforme à l'une des revendications 1 à 4, caractérisé en ce que les faces (17,18) de la nervure (12) et de la rainure (13) qui sont opposées à la paroi flexible (14) sont appliquées l'une contre l'autre et sont sensiblement perpendiculaires au plan d'assemblage (M) des deux demi-coquilles (1a, 1b).

6. Procédé pour réaliser l'étanchéité entre les deux demi-coquilles (1a, 1b) du manchon conforme à l'une des revendications 1 à 5, caractérisé en ce qu'on applique une bande de mastic (16) contre la face interne (14a) de la paroi flexible (14) qui borde la rainure (13) de l'une des demi-coquilles, on engage la nervure (12) de l'autre demi-coquille dans la rainure (13), on serre l'une contre l'autre les deux demi-coquilles (1a, 1b), après quoi on met l'intérieur du manchon sous pression.

7. Procédé conforme à la revendication 6, caractérisé en ce que l'épaisseur de la bande de mastic (16) est au moins égale à la distance (d) comprise entre le sommet (12b) de la nervure (12) et la face interne (14a) de la paroi flexible (14), lorsque cette nervure est complètement engagée dans la rainure.

8. Procédé conforme à l'une des revendications 6 ou 7, caractérisé en ce que le volume de la bande de mastic (16) est au moins égal au volume de l'espace compris entre les faces adjacentes (12a, 14a) de la nervure et de la paroi flexible et entre le sommet (12b) de la nervure et le fond de la rainure (13).

## Claims

1. A sleeve of plastic material for protecting splices of electric cables or telephone cables, comprising two half-shells (1a, 1b) assembled together along their adjacent edges (2a, 2b), the edge (2a) of one half-shell (1a) being provided with a longitudinal rib (12) engaged within a groove (13) formed in the adjacent edge (2b) of the other half-shell (1b) and sealing means being provided between said edges, characterized in that the groove (13) has an inner side wall (14) of sufficiently small thickness to be flexible, in that the height (H) of the rib (12) which is engaged in said groove is slightly smaller than the depth (P) of the groove, in that the face (12a) of the rib (12) which is adjacent to the inner face (14a) of said flexible wall forms with said inner face an angle (a) of a few degrees having a vertex (15) located at the extremity of said wall, the space defined by said angle (a) being filled by a strip of putty (16) which is deformed and compressed between said faces of the rib and of the wall.

2. A sleeve according to claim 1, characterized in that the space (E) located between the summit (12b) of the rib (12) and the bottom of the groove (13) is at least partly filled with material produced by creep deformation of the strip of putty (16) which is compressed between the faces (12a and 14a).

3. A sleeve according to claim 1 or claim 2, characterized in that the flexible wall (14), the groove (13) and the rib (12) have a trapezoidal cross-section.

4. A sleeve according to one of claims 1 to 3, characterized in that the large bases (B) of the trapezoidal cross-section of the groove (13) and of the rib (12) engaged in said groove are in coincident relation.

5. A sleeve according to one of claims 1 to 4, characterized in that the faces (17, 18) of the rib (12) and of the groove (13) which are opposite to the flexible wall (14) are applied against each other and are substantially perpendicular to the plane of assembly (M) of the two half-shells (1a, 1b).

6. A method for forming a tight seal between the two half-shells (1a, 1b) of the sleeve according to one of claims 1 to 5, characterized in that a strip of putty (16) is applied against the inner face (14a) of the flexible wall (14) which extends on one side of the groove (13) of one of the half-shells, the rib (12) of the other half-shell is engaged in the groove (13), the two half-shells (1a, 1b) are tightly applied against each other, whereupon the interior of the sleeve is put under pressure.

7. A method according to claim 6, characterized in that the thickness of the strip of putty (16) is at least equal to the distance (d) between the summit (12b) of the rib (12) and the inner face (14a) of the flexible wall (14) when said rib is fully engaged in the groove.

8. A method according to claim 6 or claim 7, characterized in that the volume of the strip of putty (16) is at least equal to the volume of the space located between the adjacent faces (12a, 14a) of the rib and of the flexible wall and between the summit (12b) of the rib and the bottom of the groove (13).

## Patentansprüche

1. Hülse aus Plastikmaterial zum Schützen der Spleißstelle von elektrischen Kabeln oder Telefonkabeln, mit zwei Halbschalen (1a, 1b), die entlang ihren benachbarten Rändern (2a, 2b) aneinandergefügt sind, wobei der Rand (2a) der einen Halbschale (1a) eine längsgerichtete Rippe (12) umfaßt, die in eine Rille (13) eingreift, welche in dem benachbarten Rand (2b) der anderen Halbschale (1b) angebracht ist, und wobei Dichtmittel zwischen den genannten Rändern vorgesehen sind, dadurch gekennzeichnet, daß die Rille (13) innenseitig durch eine Wandung (14) berandet ist, die ausreichend dünn ist, um flexibel zu sein, daß die in die Rille eingreifende Rippe (12) eine Höhe (H) aufweist, die etwas kleiner als die Tiefe (P) der Rille ist, daß die Fläche (12a) der Rippe (12), welche an die Innenfläche (14a) der flexiblen Wandung angrenzt, mit dieser Fläche einen Winkel (a) von einigen Grad bildet, dessen Scheitel (15) am Ende der genannten Wandung liegt, wobei der durch diesen Winkel (a) definierte Raum durch einen Kittstreifen (16) ausgefüllt ist, welcher zwischen den genannten Flächen der Rippe und der Wandung deformiert und zusammengedrückt ist.

2. Hülse nach Anspruch 1, dadurch gekennzeichnet, daß der Raum (E), der zwischen dem Scheitel (12b) der Rippe (12) und dem Boden der Rille (13) liegt, wenigstens teilweise durch den Stoff ausgefüllt ist, welcher durch Schließen des Kittstreifens (16) entsteht, welcher zwischen den Flächen (12a und 14a) zusammengedrückt wird.

3. Hülse nach Anspruch 1 oder 2, dadurch gekennzeichnet, daß die flexible Wandung (14), die Rille (13) und die Rippe (12) von trapezförmigem Querschnitt sind.

4. Hülse nach einem der Ansprüche 1 bis 3, dadurch gekennzeichnet, daß die großen Basisseiten (B) des trapezförmigen Querschnitts der Rille (13) und der in diese eingreifenden Rippe (12) zusammenfallen.

5. Hülse nach einem der Ansprüche 1 bis 4, dadurch gekennzeichnet, daß die Flächen (17, 18) der Rippe (12) und der Rille (13), welche von der flexiblen Wandung (14) abgewandt sind, gegeneinandergedrückt sind und im wesentlichen senkrecht zur Zusammenfügungsebene (M) der zwei Halbschalen (1a, 1b) sind.

6. Verfahren zur Abdichtung zwischen den beiden Halbschalen (1a, 1b) der Hülse nach einem der Ansprüche 1 bis 5, dadurch gekennzeichnet, daß ein Kittstreifen (16) gegen die Innenoberfläche (14a) der flexiblen Wandung (14) angelegt wird, welche die Rille (13) einer der beiden Halbschalen berandet, daß die Rippe (12) der anderen Halbschale in die Rille (13) eingesetzt wird und daß die beiden Halbschalen (1a, 1b) gegeneinandergespannt werden, woraufhin der Innenraum der Hülse unter Druck gesetzt wird.

7. Verfahren nach Anspruch 6, dadurch gekennzeichnet, daß die Dicke des Kittstreifens (16) wenigstens gleich dem Abstand (d) zwischen dem Scheitel (12b) der Rippe (12) und der Innenoberfläche (14a) der flexiblen Wandung (14) ist, wenn diese Rippe vollständig in die Rille eingesetzt ist.

8. Verfahren nach einem der Ansprüche 6 und 7, dadurch gekennzeichnet, daß das Volumen des Kittstreifens (16) wenigstens gleich dem Volumen des Raumes ist, der zwischen den benachbarten Flächen (12a, 14a) der Rippe und der flexiblen Wandung und zwischen dem Scheitel (12b) der Rippe und dem Boden der Rille (13) enthalten ist.

FIG_1

FIG_2

FIG_3

EP 0 233 417 B1

FIG.4

FIG.5